# EUROPÄISCHE PATENTSCHRIFT

(11) **EP 4 171 465 B1**
(45) Veröffentlichungstag und Bekanntmachung des Hinweises auf die Patenterteilung: **26.11.2025**
(21) Anmeldenummer: 21742320.1
(22) Anmeldetag: 30.06.2021
(51) Int. Cl.: A61G 5/04, A61G 5/00

(54) **KLEMMVORRICHTUNG**
CLAMPING DEVICE
DISPOSITIF DE SERRAGE

(30) Priorität: 30.06.2020 CH 8082020
(43) Veröffentlichungstag der Anmeldung: 03.05.2023
(73) Patentinhaber: Küschall, Rainer, 4123 Allschwil (CH)
(72) Erfinder: Küschall, Rainer, 4123 Allschwil (CH)
(74) Vertreter: Latscha Schöllhorn Partner AG
(86) Internationale Anmeldenummer: PCT/EP2021/067989
(87) Internationale Veröffentlichungsnummer: WO 2022/003019

(56) Entgegenhaltungen:
- WO-A2-2015/040507
- DE-A1- 19 829 128

## Beschreibung

### Technisches Gebiet

Die vorliegende Erfindung fällt generell in den Bereich der Kopplungsvorrichtungen für persönliche Beförderungsmittel, die besonders für Kranke oder Behinderte ausgebildet sind, wie insbesondere Rollstühle und dergleichen. Gemäss dem Oberbegriff des Anspruchs 1 betrifft die Erfindung eine Klemmvorrichtung zur Fixierung einer Rollstuhl-Antriebseinheit an einem Rollstuhlrahmen, so dass der Rollstuhl in Form eines Rollstuhl-Bikes genutzt werden kann.

### Stand der Technik

Kopplungs- und Antriebsvorrichtungen für Rollstühle sind in vielfachen Ausführungsformen bekannt, wobei grundsätzlich zwischen den mit dem Rollstuhl fest verbundenen Antriebsvorrichtungen und den lösbaren Antriebsvorrichtungen unterschieden werden kann. Allen lösbaren Antriebsvorrichtungen ist gemeinsam, dass sie lediglich bei Bedarf mit einem Rollstuhl verbunden werden und ansonsten der Rollstuhl für den Handbetrieb im Wesentlichen frei ist von meistens sperrigen Konstruktions- bzw. Antriebselementen, die zudem entsprechend gewichtsbehaftet sind.

Aus der WO 2017/081475 A1 ist eine Antriebsvorrichtung für einen Rollstuhl bekannt, bei welcher Antriebsvorrichtung zum einen ein Haken an einer Fussstütze des Rollstuhls angreift und zum anderen zwei Stützarme mit Rahmenrohren des Rollstuhls derart verbunden sind, dass die Antriebsvorrichtung mittels Schwerkraft an dem Rollstuhl befestigt ist.

Die Druckschrift WO 2015/040507 A2 offenbart eine Antriebsvorrichtung für einen Rollstuhl, welche einen Lenker und damit verbundene Gabelscheiden aufweist, zwischen denen ein Antriebsrad mit einem Motor angeordnet ist, der aus einer Energieversorgung speisbar ist, wobei die Antriebsvorrichtung an einer Klemmstrebe eine Klemmvorrichtung aufweist, die mit einem Rahmenrohr des Rollstuhls klemmend verbindbar ist. Die hier vorliegende Klemmvorrichtung weist zwei Klemmsegmente auf, die in einer Schliessstellung über eine Rastnase an dem einen Klemmsegment und einem Haken an dem anderen Klemmsegment ineinandergreifen, wobei diese Klemmvorrichtung über einen handbetätigbaren Hebel in dieser Schliessstellung fixierbar ist. Eine weitere Antriebsvorrichtung für Rollstühle ist aus DE 198 29 128 A1 bekannt.

Diesen bekannten Stand der Technik verbindet die Notwendigkeit, dass die Antriebseinheiten manuell an dem Rollstuhl angebracht werden bzw. montiert werden müssen, wofür ein entsprechendes Mass an Geschicklichkeit und Beweglichkeit eine Grundvoraussetzung ist. Obwohl diese herkömmlichen Antriebseinheiten für vergleichsweise hoch mobile Personen zweckmässig an einem Rollstuhl montierbar sind, können die Anforderungen an Geschicklichkeit und Beweglichkeit für die Montage bzw. Demontage durch einen Nutzer des Rollstuhls jenes Mass übersteigen, welches er zu leisten überhaupt in der Lage ist. Konsequenterweise sind solche Antriebseinheiten dann nicht selbstständig durch den Nutzer anwendbar, womit dessen Selbstständigkeit eingeschränkt wird und gegebenenfalls eine Hilfsperson für die Montage bzw. Demontage zwingend erforderlich ist.

Diesbezüglich wird in der WO 2019/057799 A1 eine Antriebsvorrichtung für einen Rollstuhl mit einem Steuerelement, einem Fahrwerk und einem Halterahmen beschrieben. Des Weiteren ist eine Fixiereinrichtung am Halterahmen montiert, die an einem Rollstuhlrahmen des Rollstuhls fixierbar ist. Die Fixiereinrichtung ist über einen Fixierantrieb automatisch mit dem Rollstuhlrahmen des Rollstuhls verbindbar und lösbar ausgebildet. Mittels dieser automatischen Fixiereinrichtung kann eine selbstständige und einfache Montage bzw. Demontage der Antriebsvorrichtung an einem herkömmlichen Rollstuhl ermöglicht werden. Allerdings ist diese Lösung mit einem relativ hohen Kostenaufwand verbunden.

Es ist deshalb Aufgabe der vorliegenden Erfindung, eine Kopplungsvorrichtung vorzuschlagen, welche gleichermassen eine selbstständige und einfache Montage bzw. Demontage einer Antriebseinheit an einem herkömmlichen Rollstuhl ermöglicht und welche ausserdem vergleichsweise günstig in der Herstellung ist. Die Vorrichtung soll insbesondere auch ermöglichen, dass etwa Personen mit Tetraplegie, welche ggf. nur über eine eingeschränkte motorische oder sensorische Kontrolle verfügen, diese sicher betätigen können.

### Darstellung der Erfindung

Die Aufgabe wird erfindungsgemäss durch eine Klemmvorrichtung gelöst, wie sie im unabhängigen Anspruch 1 definiert ist. Vorteilhafte Ausführungsvarianten der Erfindung ergeben sich aus den abhängigen Ansprüchen.

In einem Aspekt ist die Erfindung eine Klemmvorrichtung zur Fixierung einer Rollstuhl-Antriebseinheit an einem Rollstuhlrahmen. Die Klemmvorrichtung umfasst ein Hebelelement, eine erste Klemmbacke, eine zweite Klemmbacke und eine Klemmbackenhalterung Die erste Klemmbacke und die zweite Klemmbacke sind dabei über einen Backenweg zwischen einer Offenstellung und einer Schliessstellung beweglich an der Klemmbackenhalterung gelagert sind. Das Hebelelement ist über einen Hebelweg beweglich an die erste Klemmbacke und die zweite Klemmbacke gekoppelt, so dass eine Bewegung des Hebelelements über den Hebelweg die Klemmbacken über den Backenweg bewegt. Das Hebelelement ist über eine Übersetzungsanordnung an die erste Klemmbacke und die zweite Klemmbacke gekoppelt. Die Übersetzungsanordnung koppelt das Hebelelement dabei so an die erste Klemmbacke und die zweite Klemmbacke, dass ausgehend von der Offenstellung der Klemmbacken ein Bewegen des Hebelelements um den halben Hebelweg die erste Klemmbacke und die zweite Klemmbacke um mehr als den halben Backenweg in Richtung der Schliessstellung der Klemmbacken bewegt.

Hierbei kann vorgesehen sein, dass sowohl die erste als auch die zweite Klemmbacke über das Hebelelement bzw. die Übersetzungsanordnung bewegt werden.

Mittels der vorliegenden Erfindung kann gewährleistet werden, dass der Bedienperson für den eigentlichen Klemmvorgang, d.h. das Festklemmen der Klemmbacken am Rollstuhlrahmen, noch überproportional viel Hebelweg zur Verfügung steht. Hierdurch kann auch mit weniger Kraftaufwand und ggf. einer eingeschränkten Handhabungsgenauigkeit eine feste Kopplung der Antriebseinheit an den Rollstuhlrahmen erreicht werden.

Ein weiterer Vorteil besteht darin, dass für die Verbindung der Antriebsvorrichtung am Rollstuhl dieser mit keiner zusätzlichen Komponente ausgestattet werden muss. Vielmehr wirkt die erfindungsgemässe Klemmvorrichtung direkt am Rollstuhlrahmen. So kann der Rollstuhl handlich und leicht bleiben, wenn die Antriebsvorrichtung nicht mit ihm verbunden ist.

Der "Backenweg", den die erste Klemmbacke und die zweite Klemmbacke von der Offenstellung in die Schliessstellung zurücklegen umfasst den Gesamtweg, den beide Klemmbacken zusammen zurücklegen. Dabei muss nicht jede Klemmbacke notwendigerweise die gleiche Wegstrecke zurücklegen, es kann auch sein, dass die eine Klemmbacke etwa 30 % des Gesamtwegs zurücklegt und die andere Klemmbacke etwa 70 % des Gesamtwegs.

Der "Hebelweg" bezeichnet die Wegstrecke, welche das Hebelelement zurücklegt, wenn es die Klemmbacken von der Offenstellung in die Schliessstellung bringt. Der zurückgelegte Hebelweg lässt sich insbesondere auch an der Stellung des Bolzens in der Lochführung der Exzenteranordnung ablesen, da das hintere Ende des Hebelelements mit diesem verbunden ist. Befinden sich die beiden Klemmbacken in ihrer Offenstellung, so befindet sich das Hebelelement in seiner Ausgangsstellung.

Die "Übersetzungsanordnung" sorgt für eine optimierte Verteilung der zum Festklemmen der Klemmvorrichtung notwendigen Kraft dergestalt, dass zu Beginn des Schliessvorgangs mit einem relativ kleinen Hebelweg und einem geringen Kraftaufwand ein relativ grosser Backenweg zurückgelegt werden kann und am Ende des Schliessvorgangs mit einem relativ grossen verbleibenden Hebelweg das letzte Stück Backenweg auch mit einem relativ geringen Kraftaufwand zurückgelegt werden kann. Die Übersetzungsanordnung kann etwa in Form einer Exzenteranordnung ausgestaltet sein oder aber in Form einer Zuzieh-Schraube mit progressivem Gewindeverlauf oder einer anderen gleichartigen Anordnung. Entscheidend dabei ist, dass die Übersetzung so ausgestaltet ist, dass insbesondere für das letzte Wegstück der Klemmbacken noch ein relativ langer Hebelweg zur Verfügung steht, so dass der letztendliche Festklemmvorgang (d.h. das Erreichen der Schliessstellung) auch mit wenig Kraftaufwand und ggf. eingeschränkter Koordination bewerkstelligt werden kann. Dies bedeutet im Umkehrschluss, dass gerade zu Beginn des Schliessvorgangs mit einem relativ geringen Hebelweg überproportional viel Backenweg zurückgelegt wird.

Die "Klemmbackenhalterung" umfasst generell Vorrichtungen, an denen die Klemmbacken beweglich gelagert sind. Die Klemmbackenhalterung kann auch die Übersetzungsanordnung, jedenfalls teilweise, umfassen.

Bevorzugtermassen haben die erste und zweite Klemmbacke etwa zwischen 55 % und 98 %, vorzugsweise etwa zwischen 70 % und 95 % des Backenwegs zurückgelegt, wenn die Hebelvorrichtung ihren halben Hebelweg zurückgelegt hat. Auf diese Weise kann eine optimale Kraftverteilung beim Schliessvorgang erreicht werden.

Vorzugsweise nimmt die durch die Übersetzungsanordnung bereitgestellte Übersetzung von der Offenstellung in die Schliessstellung laufend zu. Hierdurch kann eine besonders günstige taktile Rückmeldung für den Benutzer bereitgestellt werden.

Vorzugsweise ist die Übersetzungsanordnung in Form einer Exzenteranordnung konfiguriert. Diese Ausgestaltung hat sich als besonders effizient in der Konstruktion erwiesen.

Vorzugsweise weist die Exzenteranordnung zumindest eine Lochführung auf, in welcher ein Bolzen angeordnet ist, der mit der Hebelvorrichtung wirkverbunden ist. Dies gewährleistet einen besonders zuverlässigen Betrieb der erfindungsgemässen Klemmvorrichtung.

Vorzugsweise weist die Exzenteranordnung weiterhin ein Gelenkstück auf, welches mit der ersten Klemmbacke und dem Bolzen verbunden und über den Bolzen mit der Hebelvorrichtung wirkverbunden ist. Hierdurch kann wiederum eine konstruktiv besonders einfache Wirkverbindung erzielt werden.

Vorzugsweise ist die zweite Klemmbacke an einem Klemmbackenträger montiert und die Hebelvorrichtung gelenkig mit dem Klemmbackenträger verbunden. Auf diese Weise kann ein optimierter Bewegungsablauf für die zweite Klemmbacke erreicht werden.

Vorzugsweise weist der Klemmbackenträger einen ersten Lochbolzen und die zweite Klemmbacke einen zweiten Lochbolzen auf, wobei der erste Lochbolzen und der zweite Lochbolzen mittels einer Schraube miteinander verbunden sind. Hierdurch wird eine besonders robuste Verbindung zwischen der zweiten Klemmbacke und dem Klemmbackenträger geschaffen.

Vorzugsweise ist der Klemmbackenträger gelenkig mit der Klemmbackenhalterung verbunden. Auch hierdurch kann der Bewegungsablauf für die zweite Klemmbacke weiter verbessert werden.

Zwischen der ersten Klemmbacke und der zweiten Klemmbacke ist eine Feder angeordnet. Mittels der Feder kann insbesondere der Öffnungsvorgang der Klemmbacken, d.h. von der Schliessstellung in die Offenstellung, massgeblich unterstützt werden.

Vorzugsweise weisen die erste und zweite Klemmbacke jeweils eine Klemmausnehmung auf, welche konfiguriert sind, um etwa ein Rahmenelement eines Rollstuhlrahmens klemmend aufzunehmen. Hierdurch kann eine besonders gute Anpassung an den Rollstuhlrahmen erzielt werden.

Vorzugsweise weisen die Klemmausnehmungen jeweils einen Schutzüberzug auf. Mittels dieser Massnahme sollen unerwünschte Kratzer am Rollstuhlrahmen vermieden werden. Zudem kann mit dem Schutzüberzug ggf. auch ein besserer Sitz der Klemmvorrichtung am Rollstuhlrahmen gewährleistet werden.

Vorzugsweise sind die zweite Klemmbacke und der Klemmbackenträger über einen gemeinsamen Backenstift an der Klemmbackenhalterung angelenkt. Hierdurch kann der Bewegungsablauf weiter optimiert werden. Der Klemmbackenträger und die zweite Klemmbacke sind vorzugsweise nicht relativ zueinander beweglich.

Vorzugsweise ist die erste Klemmbacke über einen (weiteren) Backenstift an der Klemmbackenhalterung angelenkt. Auf diese Weise kann ein für die erste Klemmbacke vorteilhafter Bewegungsablauf erreicht werden.

Vorzugsweise weist die Hebelvorrichtung eine Form mit zwei Abknickungen auf. Diese Konstruktion hat sich im Hinblick auf eine besonders einfache und ergonomisch vorteilhafte Handhabung bewährt.

Vorzugsweise bilden die erste Klemmbacke und die zweite Klemmbacke an ihrem freien Ende eine erweiterte Einführöffnung aus. Hierdurch kann das Ankoppeln an den Rollstuhlrahmen erleichtert werden.

Vorzugsweise ist weiterhin die Klemmbackenhalterung an einem Trägerelement einer Rollstuhl-Antriebseinheit montiert. Auf diese Weise kann eine besonders vorteilhafte räumliche Anordnung der einzelnen Komponenten zueinander geschaffen werden.

Vorzugsweise ist zudem das Hebelelement entlang der Bewegungsrichtung H von der bzw. seiner Offenstellung in die bzw. seine Schliessstellung bewegbar (d.h. auf die Klemmbacken zu). Mit anderen Worten wird das Hebelelement zum Zwecke des Schliessens der Klemmbacken in Richtung der Klemmbacken gedrückt, was eine ergonomisch besonders günstige wie auch eine besonders effektive Klemmbewegung ermöglicht.

In einem anderen Aspekt ist die Erfindung eine Rollstuhlantriebseinheit vorgesehen, welche eine wie oben beschriebene Klemmvorrichtung aufweist. Mit einer solchen Rollstuhlantriebseinheit können die vorstehend im Zusammenhang mit der erfindungsgemässen Klemmvorrichtung und deren bevorzugten Ausführungsformen beschriebenen Effekte und Vorteile effizient implementiert werden.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen versehen. An dieser Stelle wird darauf hingewiesen, dass die Figuren keinerlei einschränkende Wirkung auf den Erfindungsgegenstand haben, sondern lediglich mögliche Ausführungsformen des Erfindungsgedankens darstellen. Es zeigen:
- Fig. 1: eine Seitenansicht eines Rollstuhl-Bikes mit einer Ausführungsform einer erfindungsgemässen Rollstuhl-Antriebseinheit;
- Fig. 2: eine Unteransicht einer Ausführungsform einer erfindungsgemässen Klemmvorrichtung in der Offenstellung;
- Fig. 3: die erfindungsgemässe Klemmvorrichtung gemäss Fig. 2 in einer Zwischenstellung mit etwa halb zurückgelegtem Hebelweg;
- Fig. 4: die erfindungsgemässe Klemmvorrichtung gemäss Fig. 2 in der Schliessstellung;
- Fig. 5: eine perspektivische Ansicht der erfindungsgemässen Klemmvorrichtung in der Zwischenstellung gemäss Fig. 3, und
- Fig. 6: eine Draufsicht auf die erfindungsgemässe Klemmvorrichtung in der Offenstellung gemäss Fig. 2.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Figuren dargestellt verwendet. Diese räumlichen Relativangaben umfassen auch andere Positionen und Ausrichtungen als die in den Figuren dargestellten. Zum Beispiel wenn ein in den Figuren dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Figuren und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Figur lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Figuren stehen für ähnliche oder gleiche Elemente.

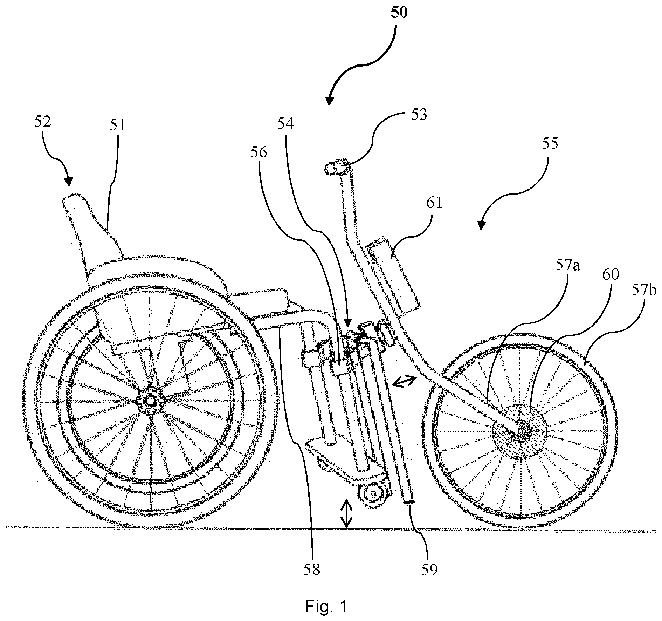

In **Fig. 1** wird zu Anschauungszwecken ein Rollstuhl 52 mit einem Rollstuhl-Bike 50 in einer Seitenansicht gezeigt. Dabei umfasst das Rollstuhlbike 50 eine Ausführungsform einer erfindungsgemässen Rollstuhl-Antriebseinheit 55 für den Rollstuhl 52 mit einem Lenker 53, einem Fahrwerk 57a, 57b und einem Halterahmen 59. Eine Fixiereinrichtung 54 in Form einer erfindungsgemässen Klemmeinrichtung ist am Halterahmen 59 montiert, welche an einem Rollstuhlrahmen 58 des Rollstuhls 52 fixierbar ist. Die Fixiereinrichtung 54 ist zum lösbaren Montieren an einem Rollstuhlrahmen 58 des Rollstuhls 52 ausgebildet. Die Fixiereinrichtung 54 weist insbesondere zwei Paare von Klemmbacken 56 auf, so dass die Fixiereinrichtung 54 beidseitig am Rollstuhlrahmen 58 befestigt werden kann. Auf dem Rollstuhlrahmen 58 ist ortsfest ein Sitz 51 montiert. Das Fahrwerk umfasst mit dem Lenker 53 verbundene Gabelscheiden 57a einer Gabel und ein zwischen den Gabelscheiden 57a montiertes Antriebsrad 57b. In der Nabe des Antriebsrads 57b ist ein Antriebsmotor 60 angeordnet, der aus einer Batterie 61 als Energieversorgung gespeist wird.

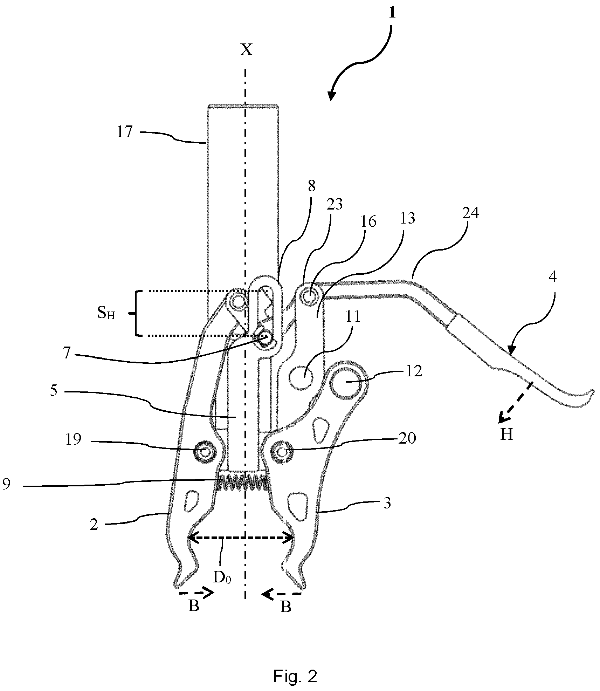

In **Fig. 2** wird eine Unteransicht einer Ausführungsform einer erfindungsgemässen Klemmvorrichtung 1 in der Offenstellung gezeigt. Die Klemmvorrichtung 1 kann beispielsweise in der Rollstuhl-Antriebseinheit 55 als die Fixiereinrichtung 54 verbaut sein.

Der Abstand der ersten Klemmbacke 2 zu der zweiten Klemmbacke 3 ist in der in Fig. 1 gezeigten Offenstellung mit D₀ am grössten. Die erste Klemmbacke 2 und die zweite Klemmbacke 3 können durch die Betätigung des Hebelelements 4 aufeinander zu oder voneinander weg bewegt werden. Die Bewegungsrichtung des Hebelelements 4 von der Offenstellung in die Schliessstellung ist mit dem gestrichelten Pfeil H angegeben. Die Bewegungsrichtung der beiden Klemmbacken 2, 3 von der Offenstellung in die Schliessstellung (d.h. aufeinander zu) wird durch die gestrichelten Pfeile B angegeben. Die beiden Klemmbacken 2, 3 sind an einer Klemmbackenhalterung 5 montiert, wobei die erste Klemmbacke 2 über einen Backenstift 19 beweglich an der Klemmbackenhalterung angeordnet ist und wobei die zweite Klemmbacke 3 über einen Backenstift 20 beweglich an der Klemmbackenhalterung 5 angeordnet ist.

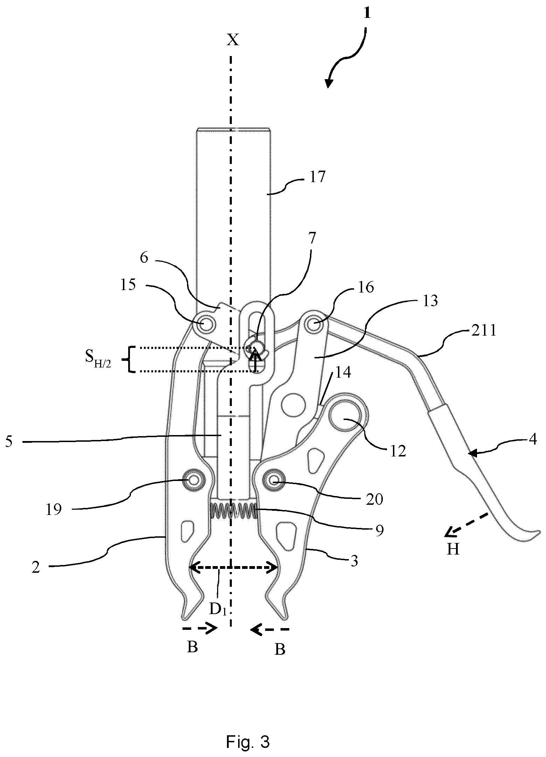

Die zweite Klemmbacke 3 ist zusätzlich mit einem Klemmbackenträger 13 verbunden, wobei die zweite Klemmbacke 3 einen Lochzapfen 12 aufweist und wobei der Klemmbacktenträger 13 einen Lochzapfen 11 aufweist. Die beiden Lochzapfen 11 und 12 sind mittels einer Schraube 14 miteinander verbunden (vgl. Fig. 3), wobei mittels der Schraube 14 die Klemmbacke 3 im Hinblick auf unterschiedliche Rahmengrössen verstellt bzw. voreingestellt werden kann. Auch der Klemmbackenträger 13 ist über den Backenstift 20 beweglich an der Klemmbackenhalterung 5 angeordnet. Die Backenstifte 19 und 20 sind in seitlichen Teilen der Klemmbackenhalterung 5 angeordnet. Der Klemmbackenträger 13 und die zweite Klemmbacke 3 sind nicht relativ zueinander beweglich. Zwischen den beiden Klemmbacken 2 und 3 ist eine Feder 9 angeordnet, welche die Klemmbacken 2 und 3 auseinander drückt.

Das Hebelelement 4 weist aus ergonomischen Gründen eine vordere Abknickung 24 und eine hintere Abknickung 23 auf. Im Bereich der hinteren Abknickung 23 ist das Hebelelement 4 über einen Gelenkstift 16 an dem Klemmbackenträger 13 angelenkt. Das hintere Ende des Hebelelements 4 umschliesst einen Bolzen 7, welcher in einem Langloch bzw. einer Lochführung 8 am hinteren Ende der Klemmbackenhalterung 5 gleitend geführt ist. Die erste Klemmbacke 2 ist an ihrem hinteren Ende über ein Gelenkstück 6 mit dem Bolzen 7 verbunden, so dass sich bei einer Betätigung des Hebelelements 4 sowohl die erste Klemmbacke 2 als auch die zweite Klemmbacke 3 bewegen.

In der gezeigten Unteransicht befindet sich der Bolzen 7 in der Offenstellung am unteren Ende des Langlochs bzw. der Lochführung 8. Das Trägerelement 17 dient als Verbindungsstück zu einer Rollstuhl-Antriebseinheit, welche mittels der Klemmvorrichtung 1 an einem Rollstuhlrahmen befestigt werden soll. Mit X wird die Längsachse der erfindungsgemässen Klemmvorrichtung 1 bezeichnet.

In der Zwischenstellung gemäss **Fig. 3** wurde das Hebelelement 4 um etwa die Hälfte seines Hebelwegs S_{H/2} in Richtung der Schliessstellung bewegt. Wie zu sehen, ist der Bolzen 7 dabei etwa in die Mitte des Langlochs bzw. der Lochführung 8 gewandert, was dem halben Hebelweg S_{H/2} entspricht. Die Bewegung des Bolzens 7 wird dabei durch den durchgezogenen Pfeil illustriert. Der Abstand zwischen der ersten Klemmbacke 2 und der zweiten Klemmbacke 3 hat sich von D₀ auf D₁ verringert, wobei die Klemmbacken 2, 3 mehr als die Hälfte ihres Weges in die Schliessstellung zurückgelegt haben. Die zwischen den Klemmbacken 2 und 3 angeordnete Feder 9 wurde entsprechend komprimiert.

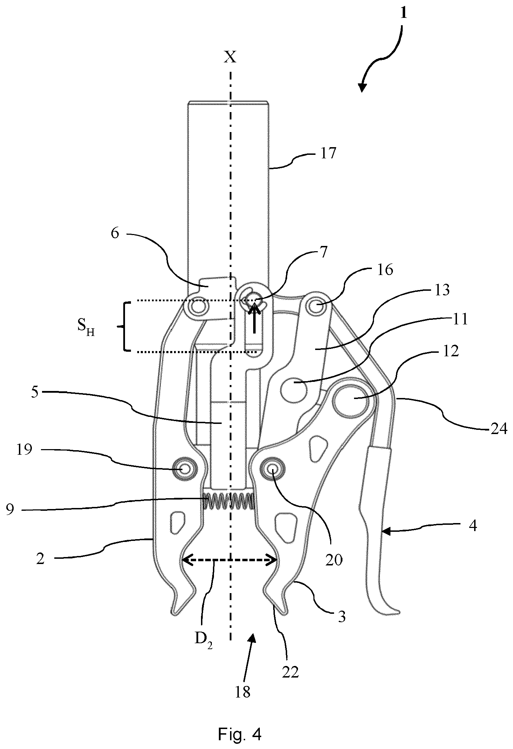

In **Fig. 4** wird die Schliessstellung der erfindungsgemässen Klemmvorrichtung 1 gezeigt. Das Hebelelement 4 wurde entsprechend um die restliche Hälfte seines Hebelwegs S_{H/2} weiterbewegt. Wie zu sehen, ist der Bolzen 7 nunmehr an das obere Ende des Langlochs bzw. der Lochführung 8 gewandert, was der restlichen Hälfte des Hebelwegs entspricht. Die Bewegung des Bolzens 7 wird wiederum durch den durchgezogenen Pfeil illustriert. Der Abstand zwischen der ersten Klemmbacke 2 und der zweiten Klemmbacke 3 hat sich nunmehr von D₁ auf D₂ verringert, wobei die Klemmbacken 2, 3 den vollständigen Klemmbackenweg (D₀-D₂) zurückgelegt haben. Die Feder 9 wurde entsprechend weiter komprimiert. Mit Blick auf die Zwischenstellung gemäss **Fig. 3** gilt somit generell: D₀-D₁ > (D₀-D₂)/2.

Das Hebelelement 4 liegt nun mit der Innenseite der Abknickung 24 am oberen Ende der zweiten Klemmbacke 3 an, so dass das freie Ende des Hebelelements 4 im Wesentlichen parallel zur Längsachse X der erfindungsgemässen Klemmvorrichtung 1 verläuft. An ihren freien Enden weisen die erste Klemmbacke 2 und die zweite Klemmbacke 3 jeweils eine Abschrägung 22 auf, welche zusammen eine Einführöffnung 18 bilden zur leichteren Kopplung mit einem Rollstuhlrahmen.

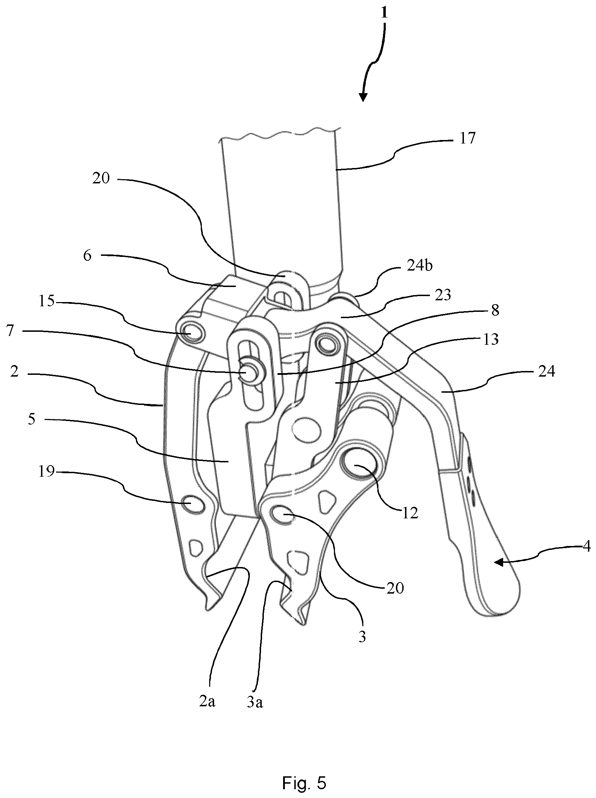

Die perspektivische Darstellung gemäss **Fig. 5** veranschaulicht die Lochführung mit den Langlöchern 8 auf jeder Seite des Hebelelements 4 und dem darin gleitend geführten Bolzen 7. Das mit der ersten Klemmbacke 2 verbundene Gelenkstück 6 ist auf jeder Seite des Hebelelements 4 und jeweils zwischen den beiden Langlöchern 8 und dem Hebelelement 4 an den Bolzen 7 angelenkt. Bei einer Bewegung des Hebelelements 4 werden also das Gelenkstück 6 und der Bolzen 7 in der Lochführung mit den beiden Langlöchern 8 mitbewegt. Das Gelenkstück 6 überträgt seine Bewegung auf die erste Klemmbacke 2. Das den Bolzen 7 umschliessende hintere Ende des Hebelelements 4 überträgt seine Bewegung auf den Klemmbackenträger 13 und über diesen auf die zweite Klemmbacke 3. Die Klemmbacken 2 und 3 weisen jeweils eine Klemmausnehmung 2a und 3a auf, welche eine optimale Anpassung an einen Rollstuhlrahmen gewährleisten.

Die Übersetzungsanordnung umfasst gemäss dieser Ausführungsform jedenfalls das Gelenkstück 6, den Bolzen 7 und die Lochführung mit den Langlöchern 8, welche das Hebelelement 4 exzenterartig an die beiden Klemmbacken 2 und 3 kopplen. Das Zusammenspiel dieser Komponenten ermöglicht den optimierten Kraftverlauf, wonach von der Offenstellung bis in die Schliessstellung zunehmend mehr Hebelweg für kleiner werdende Backenwege zur Verfügung steht.

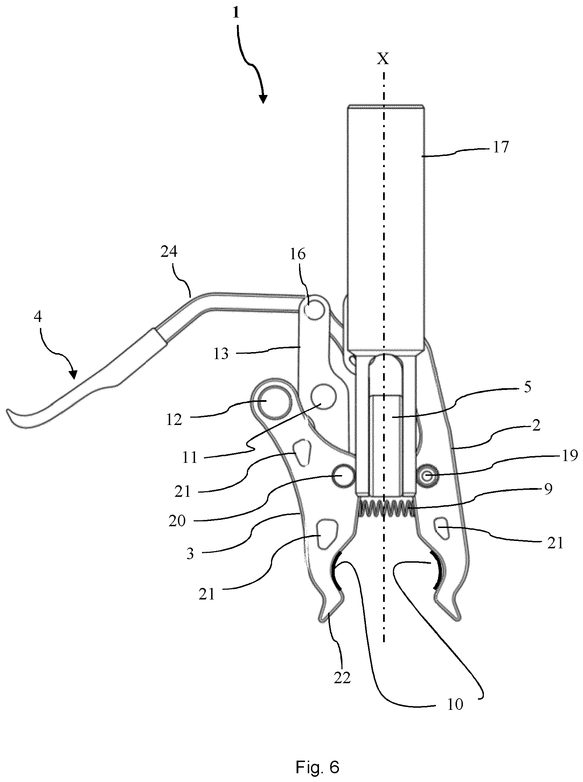

**Fig. 6** zeigt nochmal eine Draufsicht auf eine erfindungsgemässe Klemmvorrichtung 1 mit im Wesentlichen denselben Komponenten wie in den vorherigen Figuren. Zusätzlich erkennt man hier in den Klemmausnehmungen angeordnete Schutzbezüge 10, welche ein Verkratzen des Rollstuhlrahmens verhindern und ggf. für einen optimierten Sitz der Klemmbacken 2 und 3 sorgen sollen. Die erste Klemmbacke 2 und die zweite Klemmbacke 3 weisen im Übrigen aus konstruktiven Gründen jeweils eine oder mehrere Durchgangsöffnungen 21 auf. Die Klemmbackenhalterung 5 kann unbeweglich an dem Trägerelement 17 montiert sein. Vorzugsweise ist die Klemmbackenhalterung 5 aber verkippbar gegenüber dem Trägerelement 17 montiert.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr", "quasi" und dergleichen in Verbindung mit einer Eigenschaft beziehungsweise einem Wert definieren insbesondere auch genau die Eigenschaft beziehungsweise genau den Wert. Die Begriffe "etwa", "quasi" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

### Bezugszeichenliste:

| | | | |
|---|---|---|---|
| 1 | Klemmvorrichtung | 50 | Rollstuhlbike |
| 2 | erste Klemmbacke | 51 | Sitz |
| 2a | Klemmausnehmung | 52 | Rollstuhl |
| 3 | zweite Klemmbacke | 53 | Lenker |
| 3a | Klemmausnehmung | 54 | Fixiereinrichtung |
| 4 | Hebelelement | 55 | Rollstuhl-Antriebseinheit |
| 5 | Klemmbackenhalterung | 56 | Klemmbacken |
| 6 | Gelenkstück | 57a | Gabelscheiden |
| 7 | Bolzen | 57b | Antriebsrad |
| 8 | Lochführung bzw. Langloch | 58 | Rollstuhlrahmen |
| 9 | Feder | 59 | Halterahmen |
| 10 | Schutzüberzug | 60 | Antriebsmotor |
| 11 | erster Lochbolzen | 61 | Batterie |
| 12 | zweiter Lochbolzen | | |
| 13 | Klemmbackenträger | B | Bewegungsrichtung Backen |
| 14 | Schraube | D₀ | Abstand Backen Offenstellung |
| 15 | Gelenkstift | D₁ | Abstand Backen bei S_{H/2} |
| 16 | Gelenkstift | D₂ | Abstand Backen Schliessstellung |
| 17 | Trägerelement | H | Bewegungsrichtung Hebel |
| 18 | Einführöffnung | S_{H} | Hebelweg |
| 19 | Backenstift | X | Längsachse |
| 20 | Backenstift | | |
| 21 | Durchgangsöffnungen | | |
| 22 | Abschrägungen | | |
| 23 | Abknickung | | |
| 24 | Abknickung | | |

## Patentansprüche

1. Klemmvorrichtung (1) zur Fixierung einer Rollstuhl-Antriebseinheit an einem Rollstuhlrahmen, aufweisend ein Hebelelement (4), eine erste Klemmbacke (2), eine zweite Klemmbacke (3) und eine Klemmbackenhalterung (5), wobei
die erste Klemmbacke (2) und die zweite Klemmbacke (3) über einen Backenweg (D₀-D₂) zwischen einer Offenstellung (D₀) und einer Schliessstellung (D₂) beweglich an der Klemmbackenhalterung (5) gelagert sind, und
das Hebelelement (4) über einen Hebelweg (S_{H}) beweglich an die erste Klemmbacke (2) und die zweite Klemmbacke (3) gekoppelt ist, so dass eine Bewegung des Hebelelements (4) über den Hebelweg (S_{H}) die Klemmbacken (2, 3) über den Backenweg (D₀-D₂) bewegt,
**gekennzeichnet durch** eine Übersetzungsanordnung (6, 7, 8),
wobei die Übersetzungsanordnung (6, 7, 8) das Hebelelement (4) so an die erste Klemmbacke (2) und die zweite Klemmbacke (3) koppelt, dass ausgehend von der Offenstellung (D₀) der Klemmbacken (2, 3) ein Bewegen des Hebelelements (4) um den halben Hebelweg (S_{H/2}) die erste Klemmbacke (2) und die zweite Klemmbacke (3) um mehr als den halben Backenweg (D₀-D₂/2) in Richtung der Schliessstellung (D₂) der Klemmbacken (2, 3) bewegt, und
wobei zwischen der ersten Klemmbacke (2) und der zweiten Klemmbacke (3) eine Feder (9) angeordnet ist.

2. Klemmvorrichtung (1) gemäss Anspruch 1, wobei die Übersetzungsanordnung (6, 7, 8) dazu ausgestaltet ist, dass ausgehend von der Offenstellung (D₀) der Klemmbacken (2, 3) die Klemmbacken (2, 3) etwa zwischen 55 % und 98 %, vorzugsweise etwa zwischen 70 % und 95 % des Backenwegs (D₀-D₂) zurücklegen, wenn das Hebelelement (4) den halben Hebelweg (S_{H/2}) zurücklegt.

3. Klemmvorrichtung (1) gemäss Anspruch 1 oder 2, wobei die durch die Übersetzungsanordnung (6, 7, 8) bereitgestellte Übersetzung von der Offenstellung (D₀) in die Schliessstellung (D₂) laufend zunimmt.

4. Klemmvorrichtung (1) gemäss einem der vorhergehenden Ansprüche, wobei die Übersetzungsanordnung (6, 7, 8) in Form einer Exzenteranordnung konfiguriert ist.

5. Klemmvorrichtung (1) gemäss Anspruch 4, wobei die Exzenteranordnung zumindest eine Lochführung (8) aufweist, in welcher ein Bolzen (7) angeordnet ist, der mit dem Hebelelement (4) wirkverbunden ist, und/oder wobei die Exzenteranordnung weiterhin ein Gelenkstück (6) aufweist, welches mit der ersten Klemmbacke (2) und dem Bolzen (7) verbunden und über den Bolzen (7) mit dem Hebelelement (4) wirkverbunden ist.

6. Klemmvorrichtung (1) gemäss einem der vorhergehenden Ansprüche, wobei die zweite Klemmbacke (3) an einem Klemmbackenträger (13) montiert ist und wobei das Hebelelement (4) gelenkig mit dem Klemmbackenträger (13) verbunden ist.

7. Klemmvorrichtung (1) gemäss Anspruch 6, wobei der Klemmbackenträger (13) einen ersten Lochbolzen (11) und die zweite Klemmbacke (3) einen zweiten Lochbolzen (12) aufweist, wobei der erste Lochbolzen (11) und der zweite Lochbolzen (12) mittels einer Schraube (14) miteinander verbunden sind, und/oder wobei der Klemmbackenträger (13) gelenkig mit der Klemmbackenhalterung (5) verbunden ist.

8. Klemmvorrichtung (1) gemäss einem der vorhergehenden Ansprüche, wobei die Klemmbacken (2, 3) jeweils eine Klemmausnehmung (2a, 3a) aufweisen, welche konfiguriert ist, um ein Rahmenelement eines Rollstuhlrahmens klemmend aufzunehmen, wobei die Klemmausnehmungen (2a, 3a) vorzugsweise jeweils einen Schutzüberzug (10) aufweisen.

9. Klemmvorrichtung (1) gemäss einem der vorhergehenden Ansprüche, wobei die zweite Klemmbacke (3) und der Klemmbackenträger (13) über einen gemeinsamen Backenstift (20) an der Klemmbackenhalterung (5) angelenkt sind.

10. Klemmvorrichtung (1) gemäss einem der vorhergehenden Ansprüche, wobei die erste Klemmbacke (2) über einen Backenstift (19) an der Klemmbackenhalterung (5) angelenkt ist.

11. Klemmvorrichtung (1) gemäss einem der vorhergehenden Ansprüche, wobei das Hebelelement (4) eine Form mit zwei Abknickungen (23, 24) aufweist.

12. Klemmvorrichtung (1) gemäss einem der vorhergehenden Ansprüche, wobei die erste Klemmbacke (2) und die zweite Klemmbacke (3) an ihrem freien Ende eine erweiterte Einführöffnung (18) ausbilden.

13. Klemmvorrichtung (1) gemäss einem der vorhergehenden Ansprüche, wobei die Klemmbackenhalterung (5) an einem Trägerelement (17) für eine Rollstuhl-Antriebseinheit montiert ist.

14. Klemmvorrichtung (1) gemäss einem der vorhergehenden Ansprüche, **dadurch gekennzeichnet, dass** das Hebelelement (4) entlang der Bewegungsrichtung (H) von der Offenstellung in die Schliessstellung bewegbar ist.

15. Rollstuhl-Antriebseinheit mit einer Klemmvorrichtung (1) nach einem der vorangehenden Ansprüche.

## Claims

1. A clamping device (1) for fixing a wheelchair drive unit to a wheelchair frame, having a lever element (4), a first clamping jaw (2), a second clamping jaw (3) and a clamping jaw holder (5), wherein
the first clamping jaw (2) and the second clamping jaw (3) are mounted on the clamping jaw holder (5) in a movable manner between an open position (D₀) and a closed position (D₂) along a jaw path (D₀-D₂), and
the lever element (4) is coupled to the first clamping jaw (2) and the second clamping jaw (3) in a movable manner along a lever path (S_{H}) such that a movement of the lever element (4) along the lever path (S_{H}) causes the clamping jaws (2, 3) to move along the jaw path (D₀-D₂),
**characterized by** a transmission arrangement (6, 7, 8),
wherein the transmission arrangement (6, 7, 8) couples the lever element (4) to the first clamping jaw (2) and the second clamping jaw (3) in such a way that, starting from the open position (D₀) of the clamping jaws (2, 3), moving the lever element (4) by half the lever path (S_{H/2}) causes the first clamping jaw (2) and the second clamping jaw (3) to move by more than half the jaw path (D₀-D₂/2) in the direction of the closed position (D₂) of the clamping jaws (2, 3), and
wherein a spring (9) is arranged between the first clamping jaw (2) and the second clamping jaw (3).

2. The clamping device (1) according to claim 1, wherein the transmission arrangement (6, 7, 8) is arranged to, starting from the open position (D₀) of the clamping jaws (2, 3), travel the clamping jaws (2, 3) between approximately 55% and 98%, preferably between 70% and 95% of the jaw path (D₀-D₂) when the lever element (4) travels half of the lever path (S_{H/2}).

3. The clamping device (1) according to claim 1 or 2, wherein the transmission provided by the transmission arrangement (6, 7, 8) increases continuously from the open position (D₀) to the closed position (D₂).

4. The clamping device (1) according to any of the preceding claims, in which the transmission arrangement (6, 7, 8) is configured in the form of an eccentric arrangement.

5. The clamping device (1) according to claim 4, wherein the eccentric arrangement has at least one hole guide (8) in which a bolt (7) is arranged that is operatively connected to the lever element (4), and/or wherein the eccentric arrangement also has an articulated piece (6) that is connected to the first clamping jaw (2) and the bolt (7) and is operatively connected to the lever element (4) via the bolt (7).

6. The clamping device (1) according to any of the preceding claims, wherein the second clamping jaw (3) is installed on a clamping jaw support (13) and wherein the lever element (4) is connected in an articulated manner to the clamping jaw support (13).

7. The clamping device (1) according to claim 6, wherein the clamping jaw support (13) has a first hole bolt (11) and the second clamping jaw (3) has a second hole bolt (12), wherein the first hole bolt (11) and the second hole bolt (12) are connected to each other by means of a screw (14), and/or wherein the clamping jaw support (13) is connected in an articulated manner to the clamping jaw holder (5).

8. The clamping device (1) according to any of the preceding claims, wherein the clamping jaws (2, 3) in each case have a clamping recess (2a, 3a) that is configured to receive a frame element of a wheelchair frame in a clamping manner, wherein the clamping recesses (2a, 3a) in each case preferably have a protective coating (10).

9. The clamping device (1) according to any of the preceding claims, in which the second clamping jaw (3) and the clamping jaw support (13) are articulated at the clamping jaw holder (5) via a common jaw pin (20).

10. The clamping device (1) according to any of the preceding claims, wherein the first clamping jaw (2) is articulated at the clamping jaw holder (5) via a jaw pin (19).

11. The clamping device (1) according to any of the preceding claims, wherein the lever element (4) has a shape with two bends (23, 24).

12. The clamping device (1) according to any of the preceding claims, wherein the first clamping jaw (2) and the second clamping jaw (3) form an enlarged insertion opening (18) at their free end.

13. The clamping device (1) according to any of the preceding claims, wherein the clamping jaw holder (5) is installed on a support element (17) for a wheelchair drive unit.

14. The clamping device (1) according to any of the preceding claims, **characterized in that** the lever element (4) is movable along the direction of movement (H) from the open position to the closed position.

15. A wheelchair drive unit having a clamping device (1) according to any of the preceding claims.

## Revendications

1. Dispositif de serrage (1) pour la fixation d'une unité d'entraînement de fauteuil roulant sur un châssis de fauteuil roulant, présentant un élément de levier (4), une première mâchoire de serrage (2), une seconde mâchoire de serrage (3) et une monture de mâchoire de serrage (5), dans lequel
la première mâchoire (2) et la seconde mâchoire (3) sont montées mobiles sur la monture de mâchoire de serrage (5) sur une course de mâchoire (D₀-D₂) entre une position ouverte (D₀) et une position fermée (D₂), et
l'élément de levier (4) est accouplé de manière mobile à la première mâchoire de serrage (2) et à la seconde mâchoire de serrage (3) sur une course de levier (S_{H}), de sorte qu'un mouvement de l'élément de levier (4) sur la course de levier (S_{H}) déplace les mâchoires de serrage (2, 3) sur la course de mâchoire (D₀-D₂),
**caractérisé par** un agencement de transmission (6, 7, 8),
dans lequel l'agencement de transmission (6, 7, 8) accouple l'élément de levier (4) à la première mâchoire de serrage (2) et à la seconde mâchoire de serrage (3) de telle sorte que, en partant de la position ouverte (D₀) des mâchoires de serrage (2, 3), un mouvement de l'élément de levier (4) de la moitié de la course de levier (S_{H/2}) déplace la première mâchoire (2) et la seconde mâchoire (3) de plus de la moitié de la course de mâchoire (D₀-D₂/2) en direction de la position fermée (D₂) des mâchoires (2, 3), et
dans lequel un ressort (9) est disposé entre la première mâchoire de serrage (2) et la seconde mâchoire de serrage (3).

2. Dispositif de serrage (1) selon la revendication 1, dans lequel l'agencement de transmission (6, 7, 8) est conçu de telle sorte que, en partant de la position ouverte (D₀) des mâchoires de serrage (2, 3), les mâchoires de serrage (2, 3) parcourent environ entre 55 % et 98 %, de préférence environ entre 70 % et 95 % de la course de mâchoire (D₀-D₂) lorsque l'élément de levier (4) parcourt la moitié de la course de levier (S_{H/2}).

3. Dispositif de serrage (1) selon la revendication 1 ou 2, dans lequel la transmission fournie par l'agencement de transmission (6, 7, 8) augmente en continu de la position ouverte (D₀) à la position fermée (D₂).

4. Dispositif de serrage (1) selon l'une des revendications précédentes, dans lequel l'agencement de transmission (6, 7, 8) est configuré sous la forme d'un agencement excentrique.

5. Dispositif de serrage (1) selon la revendication 4, dans lequel l'agencement excentrique présente au moins un guidage perforé (8) dans lequel est disposé un boulon (7) qui est en liaison active avec l'élément de levier (4), et/ou dans lequel l'agencement excentrique présente en outre une pièce d'articulation (6) qui est reliée à la première mâchoire de serrage (2) et au boulon (7) et qui est en liaison active avec l'élément de levier (4) par l'intermédiaire du boulon (7).

6. Dispositif de serrage (1) selon l'une des revendications précédentes, dans lequel la seconde mâchoire (3) est montée sur un support de mâchoire de serrage (13) et dans lequel l'élément de levier (4) est relié de manière articulée au support de mâchoire de serrage (13).

7. Dispositif de serrage (1) selon la revendication 6, dans lequel le support de mâchoire de serrage (13) présente un premier boulon perforé (11) et la seconde mâchoire (3) présente un second boulon perforé (12), dans lequel le premier boulon perforé (11) et le second boulon perforé (12) sont reliés entre eux par le biais d'une vis (14), et/ou dans lequel le support de mâchoire de serrage (13) est relié de manière articulée à la monture de mâchoire de serrage (5).

8. Dispositif de serrage (1) selon l'une des revendications précédentes, dans lequel les mâchoires de serrage (2, 3) présentent chacune un évidement de serrage (2a, 3a) qui est configuré pour recevoir par serrage un élément de châssis d'un châssis de fauteuil roulant, dans lequel les évidements de serrage (2a, 3a) présentent de préférence respectivement un revêtement protecteur (10).

9. Dispositif de serrage (1) selon l'une des revendications précédentes, dans lequel la seconde mâchoire (3) et le support de mâchoire de serrage (13) sont articulés sur la monture de mâchoire de serrage (5) par l'intermédiaire d'une broche de mâchoire (20) commune.

10. Dispositif de serrage (1) selon l'une des revendications précédentes, dans lequel la première mâchoire (2) est articulée sur la monture de mâchoire de serrage (5) par l'intermédiaire d'une broche de mâchoire (19).

11. Dispositif de serrage (1) selon l'une des revendications précédentes, dans lequel l'élément de levier (4) présente une forme comportant deux courbures (23, 24).

12. Dispositif de serrage (1) selon l'une des revendications précédentes, dans lequel la première mâchoire (2) et la seconde mâchoire (3) réalisent, à leur extrémité libre, une ouverture d'insertion (18) élargie.

13. Dispositif de serrage (1) selon l'une des revendications précédentes, dans lequel la monture de mâchoire de serrage (5) est montée sur un élément de support (17) pour une unité d'entraînement de fauteuil roulant.

14. Dispositif de serrage (1) selon l'une des revendications précédentes, **caractérisé en ce que** l'élément de levier (4) est mobile le long de la direction de déplacement (H) de la position ouverte à la position fermée.

15. Unité d'entraînement de fauteuil roulant comportant un dispositif de serrage (1) selon l'une des revendications précédentes.
